Europäisches Patentamt

European Patent Office

Office européen des brevets

(11) Publication number : **0 502 648 A1**

(12) **EUROPEAN PATENT APPLICATION**

(21) Application number : 92301651.3

(22) Date of filing : 27.02.92

(51) Int. Cl.$^5$ : **B60R 19/18**

(30) Priority : 06.03.91 JP 63824/91

(43) Date of publication of application :
09.09.92 Bulletin 92/37

(84) Designated Contracting States :
**BE CH DE FR GB IT LI NL SE**

(71) Applicant : **IDEMITSU PETROCHEMICAL
COMPANY LIMITED**
1-1, Marunouchi 3-chome, Chiyoda-ku
Tokyo-to (JP)

(72) Inventor : **Fukuda, Takumasa, c/o Idemistu
Petrochemical
Company Limited, 1-1, Anesakikaigan
Ichihara-shi, Chiba-ken (JP)**
Inventor : **Tomomatsu, Ryuzo, c/o Idemistu
Petrochemical
Company Limited, 1-1, Anesakikaigan
Ichihara-shi, Chiba-ken (JP)**
Inventor : **Sugawara, Minoru, c/o Idemistu
Petrochemical
Company Limited, 1-1, Anesakikaigan
Ichihara-shi, Chiba-ken (JP)**

(74) Representative : **Baverstock, Michael George
Douglas et al
BOULT, WADE & TENNANT 27 Furnival Street
London, EC4A 1PQ (GB)**

(54) **Automobile bumper beam.**

(57) An automobile bumper beam which can be easily formed by blow molding plastics materials and yet exhibits greatly enhanced mechanical strength comprises an integral elongated hollow body having a generally U-shaped cross section consisting of an upper board (1), side board (3) and lower board (2), the upper and lower peripheries of the side board being joined with the frontal peripheries of the upper and lower boards, respectively, in which each of the upper board, side board and lower board has a double-wall structure consisting of an outer wall (1a, 2a, 3a) and an inner wall (1b, 2b, 3b) and the inner wall of the side board (3b) is bent in a zigzag or wavy form towards the outer wall (3a) in the longitudinal direction, the zigzag or wavy beding being sufficiently deep that each crest of the zigzag or wavy form towards the outer wall of the side board reaches and is bonded to the outer wall of the side board.

FIG. I

The present invention relates to an automobile bumper beam made of a plastics material, and, more particularly, to an automobile bumper beam of a plastic resin easily fabricated by blow molding and yet having high mechanical strength.

Needless to say, the most conventional or traditional materials for automobile bumper beams are metals such as steel but there has been a significant trend in recent years that metal automobile bumper beams are increasingly being superceded by bumper beams made of plastics materials in order to comply with the requirement for reducing the weight of automobiles, as well as to avoid rusting or corrosion of bumper beams throughout the life of the automobile.

Various kinds of polymeric materials are used as a material of so-called plastic-made bumper beams, including thermoplastic resins such as high-density polyethylenes, polypropylenes, ethylene-propylene copolymeric rubbers, polyurethane resins, and ABS resins, as well as composite materials based on plastic resins and reinforced with fibrous reinforcing agents such as glass fibers and carbon fibers. These polymeric materials can be shaped into the form of an automobile bumper beam by a conventional molding method such as injection molding and compression molding.

It is known that, in order to minimize the deformation of a bumper beam in an accidental collision of the automobile, a plastic-made bumper beam may be provided with a metal rib extending end-to-end along the back surface of the bumper fascia in its longitudinal direction, together with interposition of a buffering member. These metal ribs are disadvantageous due to their ready plastic deformation under impact and poor recoverability from deformation, not to mention their relatively large weight and low resistance to rusting or corrosion. In view of the problems mentioned above in connection with plastic-made bumper beams, Japanese Patent Kokai 62-1654 proposes an improved plastic-made bumper beam which can be shaped by the method of blow molding and is provided with a reinforcing member having a box-like structure. Although the problems of weight and corrosion resistance of the bumper beams can be solved by the above proposed bumper beams, the reinforcing effect in the longitudinal direction is not satisfactory.

The present invention provides a novel and improved plastic-made automobile bumper beam which is easy to fabricate by the method of integral blow molding and yet has excellent mechanical strength, thus overcoming the problems in the prior art plastic-made bumper beams.

The automobile bumper beam of the invention is an integral elongated hollow body made from a thermoplastic polymeric material having a generally U-shaped cross section consisting of an upper board, side board and lower board, the upper and lower peripheries of the side board being joined with the frontal peripheries of the upper and lower boards, respectively, in which each of the upper board, side board and lower board has a double-wall structure consisting of an outer wall and an inner wall and the inner wall of the side board is bent in a zigzag or wavy form in the longitudinal direction, each crest of the zigzag or wavy form towards the outer wall of the side board reaching and being bonded to the outer wall of the side board.

The material of the plastic-made automobile bumper beam of the invention is not particularly limitative and can be selected without particular limitations from thermoplastic polymeric materials conventionally used for automobile bumper beams. Examples of suitable thermoplastic polymeric materials include polypropylenes, high-density polyethylenes, linear low-density polyethylenes, polycarbonate resins, polyamide resins, poly(ethylene terephthalate) resins, polystyrenes, poly(oxymethylene) resins, ABS resins, AS resins, poly(phenylene oxide) resins, poly(phenylene sulfide) resins, ethylene-propylene copolymeric rubbers, and ethylene-propylene-diene ternary copolymeric rubbers. These polymeric materials can be compounded, if necessary, with a powdery or fibrous reinforcing agent such as talc, mica, calcium carbonate, glass fibers or carbon fibers.

Among the above named various polymeric materials, particularly preferable is a resin composition consisting of from 70 to 99% by weight of a homopolymeric polypropylene having a melt index not exceeding 1.0 g/10 minutes, of which the isotactic pentad fraction is at least 93%, or a copolymer of ethylene and propylene having a melt index not exceeding 1.0 g/10 minutes, of which the content of the ethylene moiety is 15% by weight or lower and the isotactic pentad fraction in the homopolymeric sequences of the propylene units is at least 93%, and from 1 to 30% by weight of talc of which the particles have an average particle diameter not exceeding 10 $\mu$m and an average aspect ratio in the range from 3 to 20. This resin composition can be further compounded, if necessary, with various kinds of known additives including other thermoplastic resins such as maleic anhydride-modified polyolefins and acrylic acid-modified polyolefins, inorganic fillers such as calcium carbonate, mica, glass fibers and carbon fibers, antioxidants, ultraviolet absorbers, heat stabilizers, lubricants, flame retardants, coloring agents, and so on, each in a limited amount.

In the following, an automobile bumper beam of the present invention is illustrated in more detail with reference to the accompanying drawings.

In the drawings:

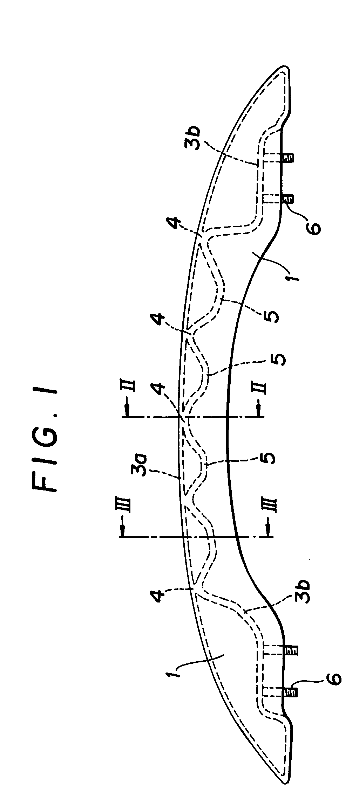

Figure 1 is a plan view of an example of an automobile bumper beam in accord with the invention.

Figures 2 and 3 are each a cross-sectional view of the bumper beam along the lines II-II and III-III, respectively, in Figure 1.

Figure 4 is a cross-sectional view indicating the angle α and radius of curvature R.

Figure 5 is a cross-sectional view showing an integral reinforcing rib on and along the upper board.

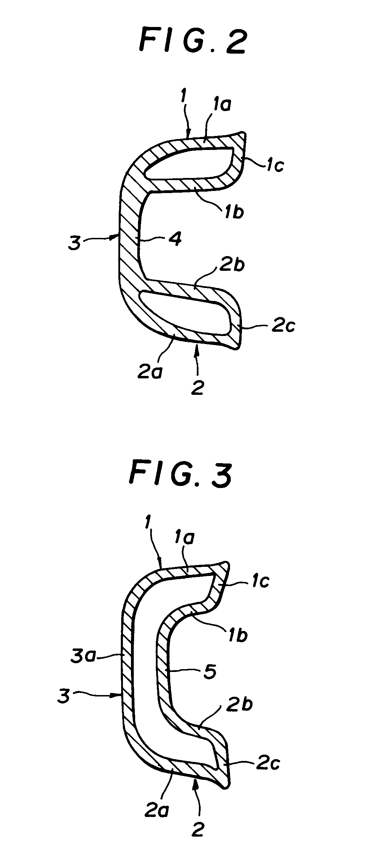

The bumper beam of the invention is an integrally shaped elongated hollow body having a generally U-shaped cross section as illustrated in Figures 2 and 3 consisting of an upper board 1, lower board 2 and side board 3, each having a double-wall structure consisting of the outer walls 1a, 2a and 3a and inner walls 1b, 2b and 3b, respectively. Specifically, the bumper beam as a whole is a hollow body formed by outer walls 1a, 2a and 3a joined together and inner walls 1b, 2b and 3b joined together to form a closed profile of the cross section. Characteristically, the inner wall 3b of the double-walled side board 3 is bent toward the outer wall 3a in a zigzag form or in a wavy form to form a number of crests 4,4 and a number of troughs 5,5. Bending of the inner wall 3b of the side board 3 in a wavy form towards the outer wall 3a is sufficiently deep that each of the crests 4,4 reaches the inner surface of the outer wall 3a of the side board 3 and is bonded thereto at the contact point or along the contact line as is illustrated in Figure 2. Needless to say, the outer wall 3a of the side board 3 can be in a curved form to fit the fascia of the bumper depending on the design of the car body on which the bumper beam is mounted.

The bumper beam can be mounted on the car body in any conventional fashion, for example, by using insert bolts 6,6 implanted in the inner wall 3b of the side board 3.

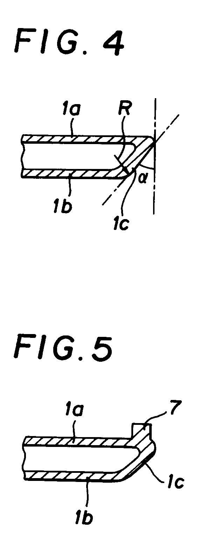

As to the design of joint between the outer and inner walls 1a and 1b of the upper board 1, it is preferable that the outer and inner walls 1a and 1b are joined together not directly but through a connecting wall 1c as is illustrated by the cross sectional view in Figures 2, 3 and 4. It is further preferable that the angle between the outer wall 1a and the connecting wall 1c should be as close as possible to 90° or should be in the range from 50° to 90° or, preferably, in the range from 60° to 90° or, more preferably, in the range from 80° to 90°. In other words, the angle α indicated in Figure 4 should be as small as possible or should not exceed 40° or, preferably, should not exceed 30° or, more preferably, should not exceed 10° in order that the bumper beam of the invention can be imparted with increased mechanical strength.

In addition, the radius of curvature R at the joining portion of the inner wall 1b and the connecting wall 1c indicated in Figure 4 is preferably in the range from 100 to 5 mm or, more preferably, in the range from 40 to 10 mm on the outer surface thereof in order that the bumper beam can be imparted with further increased mechanical strength.

Similar design should be taken into consideration relative to the joining structure between the outer wall 2a and the connecting wall 2c and between the inner wall 2b and the connecting wall 2c of the lower board 2 in respect of the angle a and the radius of curvature R.

It is further optional that, if desired, a reinforcing rib 7 having an adequate cross section is provided, as is illustrated in Figure 5 by a cross sectional view, by integral molding on the outer wall 1a of the upper board 1 over the whole length or over port of the length along the longitudinal direction of the bumper beam. Similarly to the upper board, the design of the reinforcing rib is applicable also to the lower board 2.

In the following, the plastic-made automobile bumper beam of the invention is illustrated in more detail by way of examples showing its design and fabrication procedure as well as the results of evaluation tests of the bumper beams obtained by trial fabrication.

Trial Fabrications No. 1 to No. 9

Bumper beams were prepared by blow molding in each of these Trial Fabrications from a molding resin composition consisting of a block-wise copolymer of ethylene and propylene having a melt index of 0.5 g/10 minutes, of which the content of the ethylene moiety was 1.5% by weight and the isotactic pentad fraction in the homopolymeric sequences of the propylene units was 96%, referred to as the block-PP hereinbelow, a high-density polyethylene having a melt index of 0.03 g/10 minutes, referred to as the HDPE hereinbelow, and talc of which the particles had an average particle diameter of 1.5 μm and an average aspect ratio of 15 in varied compounding proportions. Specified by the molding resin composition used in the Trial Fabrications No. 1, No. 2 and No. 4 to No. 8, in which the fabricated bumper beams each had a weight of 5.9 kg, was composed of 80% by weight of the block-PP, 10% by weight of the HDPE and 10% by weight of the talc while the molding resin composition used in the Trial Fabrication No. 3 was composed of 70% by weight of the block-PP, 10% by weight of the HDPE and 20% by weight of the talc. The bumper beam in Trial Fabrication No. 9 was shaped from the block-PP alone. The bumper beams fabricated in No. 3 and No. 9 each had a weight of 6.0 kg.

Each of the bumper beams had an overall length of 1600 mm and a double-wall structure of the upper, lower and side boards respectively consisting of the outer and inner walls but the angle a and the radius of curvature R were varied as indicated in the table below.

The conditions of the blow molding were as summarized below.
Machine conditions
   Molding machine: blow molding machine of 90 mm diameter
   Screw: 90 mm diameter
   Die: 300 mm diameter
   Accumulator: 25 liters
   Mold clamping pressure: 60 tons
   Screw revolution: 40 rpm
   Load on motor: 115 A

```
Temperature of cylinder No. 1:   230 °C
                         No. 2:   210 °C
                         No. 3:   190 °C
                         No. 4:   190 °C
Temperature of cross head No. 1:   190 °C
                          No. 2:   190 °C
                          No. 3:   190 °C
Temperature of die No. 1:   190 °C
                   No. 2:   190 °C
Temperature of metal mold:   28 °C
Temperature of resin composition:   225 °C
Molding cycle:   330 seconds
```

The table below summarizes the design of the metal mold relative to the angle a and the radius of curvature R and the results of the pendulum test undertaken according to the standard procedure specified in FMVSS PART 581 at a velocity 5 miles/hour of direct hitting on the center of the bumper beam showing the maximum deformation and final deformation each in mm. No bumper beam was destroyed by the pendulum test except that of trial Fabrication No. 6.

EP 0 502 648 A1

T a b l e

| Trial Fabrication No. | Design of metal mold | | Pendulum test | |
|---|---|---|---|---|
| | Angle $a$, degree | R, mm | Maximum deformation, mm | Final deformation, mm |
| 1 | 5 | 30 | 55 | 2 |
| 2 | 5 | 30 | 55 | 2 |
| 3 | 5 | 30 | 51 | 2 |
| 4 | 20 | 60 | 57 | 3 |
| 5 | 30 | 60 | 59 | 3 |
| 6 | 5 | 3 | 70 | 4 |
| 7 | 50 | 150 | 65 | 5 |
| 8 | 70 | 250 | 69 | 7 |
| 9 | 70 | 150 | 90 | 12 |

## Claims

1. An automobile bumper beam which is an integral elongated hollow body made from a thermoplastic polymeric material having a generally U-shaped cross section consisting of an upper board, side board and lower board, the upper and lower peripheries of the side board being joined with the frontal peripheries of the upper and lower boards, respectively, in which each of the upper board, side board and lower board has double-wall structure consisting of an outer wall and an inner wall and the inner wall of the side board is bent in a zigzag or wavy form towards the outer wall of the side board in the longitudinal direction, the zigzag or wavy bending toward the outer wall being sufficiently deep that each crest of the zigzag or wavy form towards the outer wall of the side board reaches and is bonded to the outer wall of the side board.

2. An automobile bumper beam as claimed in claim 1 in which the outer wall and the inner wall of each of the upper board and lower board are joined through a connecting wall.

3. An automobile bumper beam as claimed in claim 2 in which the angle between the outer wall and the connecting wall is in the range 50° to 90°.

4. An automobile bumper beam as claimed in claim 2 or claim 3 in which the inner wall and the connecting wall are joined together making a curved surface having a radius of curvature in the range from 5 mm to 100 mm.

5

5. An automobile bumper beam as claimed in any one of the preceding claims in which a reinforcing rib is integrally formed on and along the outer wall of at least either one of the upper and lower boards in the longitudinal direction thereof over at least part of its length.

# FIG. I

EP 0 502 648 A1

# F I G. 2

# F I G. 3

FIG. 4

FIG. 5

**European Patent Office**

**EUROPEAN SEARCH REPORT**

Application Number

## DOCUMENTS CONSIDERED TO BE RELEVANT

EP 92301651.3

| Category | Citation of document with indication, where appropriate, of relevant passages | Relevant to claim | CLASSIFICATION OF THE APPLICATION (Int. Cl.5) |
|---|---|---|---|
| A | EP - A - 0 256 174 (TOA NENRYO KOGYO KABUSHIKI KAISHA) * Totality * | 1 | B 60 R 19/18 |
| D | & JP-A2-62-001 654 | | |
| X | EP - A - 0 376 593 (MINORU SANGYO KABUSHIKI KAISHA) * Fig. 4-6; column 3, lines 37-48 * | 1,2 | |
| X | DE - A - 3 812 523 REHAU AG + CO) * Totality * | 1 | |
| X | US - A - 4 072 334 (SEEGMILLER, YOUNG) * Fig. 2,5,6 * | 1 | |
| | | | TECHNICAL FIELDS SEARCHED (Int. Cl.5) |
| | | | B 60 R |

The present search report has been drawn up for all claims

| Place of search | Date of completion of the search | Examiner |
|---|---|---|
| VIENNA | 27-05-1992 | SCHMICKL |

EPO FORM 1503 03.82 (P0401)